# EUROPEAN PATENT APPLICATION

(11) **EP 4 729 790 A1**
(43) Date of publication of application: **22.04.2026**
(21) Application number: 24823301.7
(22) Date of filing: 06.06.2024
(51) Int. Cl.: F15B 11/028, F15B 11/02

(54) **PUMP CONTROL DEVICE AND FLUID PRESSURE CONTROL SYSTEM**

(30) Priority: 14.06.2023 JP 2023098011
(71) Applicant: KYB Corporation, Minato-ku, Tokyo 105-5128 (JP)
(72) Inventor: TANAKA, Yuta, Tokyo 105-5128 (JP); EGAWA, Masahiro, Tokyo 105-5128 (JP); KOJIMA, Masanari, Tokyo 105-5128 (JP)
(74) Representative: Grünecker Patent- und Rechtsanwälte PartG mbB
(86) International application number: PCT/JP2024/020697
(87) International publication number: WO 2024/257685

(57) **Abstract**

The discharge control unit 31 of the pump control device 30 has: the relief valve 40 provided in the discharge passage 15, the relief valve 40 being configured to be opened when the pressure in the discharge passage 15 reaches a predetermined valve opening pressure; the downstream restrictor 32 configured to apply resistance to the flow of the working oil guided from the supply passage 11 to the discharge passage 15 and passed through the relief valve 40; and the pressure sensor 35a configured to measure the pressure of the working oil guided to the resistance portion from the relief valve 40, the controller 50 is configured to: increase the delivery flow amount of the pump P in accordance with the increase in the operation input; store, in advance, the pressure-flow amount characteristic that is the relationship between the pressure loss and the passing flow amount in the downstream restrictor 32; acquire the flow amount of the working oil passing through the downstream restrictor 32 based on the pressure-flow amount characteristic of the downstream restrictor 32 and the pressure measured by the pressure sensor 35a; and control the delivery capacity of the pump P and the valve opening pressure of the relief valve 40 in accordance with the flow amount of the working oil passing through the downstream restrictor 32.

## Description

### TECHNICAL FIELD

The present invention relates to a pump control device and a fluid pressure control system.

### BACKGROUND ART

In fluid pressure control devices for construction machineries, it is known to control a flow of hydraulic fluid guided from a pump to a fluid pressure actuator by a control valve in accordance with an operation input from an operation lever or the like operated by an operator, and to acquire a pressure signal in a fluid pressure circuit to control the delivery capacity of the pump on the basis of the pressure signal (see for example, JP1999-303809A).

### SUMMARY OF INVENTION

In conventional fluid pressure control systems, the flow amount of the hydraulic fluid supplied to the fluid pressure actuator and the delivery pressure of the pump are each determined by the opening area of the control valve and the delivery capacity of the pump. Therefore, when either the opening area of the control valve or the delivery capacity of the pump is changed, the flow amount of the hydraulic fluid supplied to the fluid pressure actuator and the delivery pressure of the pump are respectively changed accordingly. In contrast, in the fluid pressure control systems, there is a need to realize diverse control for the flow amount of the hydraulic fluid supplied to the fluid pressure actuator and the delivery pressure of the pump.

An object of the present invention is to provide a pump control device and a fluid pressure control system that improve the diversity of control.

According to one aspect of the present invention, a pump control device for controlling a delivery capacity of a variable displacement pump in a fluid pressure control system, the fluid pressure control system includes the pump configured to deliver hydraulic fluid to a fluid pressure actuator through a supply passage, and a control valve configured to control a flow of the hydraulic fluid supplied to and discharged from the fluid pressure actuator in accordance with an operation input by an operator for driving the fluid pressure actuator, the pump control device includes: a discharge passage configured to guide the hydraulic fluid in the supply passage to a tank; a discharge control unit configured to control the flow of the hydraulic fluid discharged to the tank through the discharge passage; and a controller configured to control the delivery capacity of the pump and operation of the discharge control unit in accordance with the operation input by the operator, the discharge control unit has: a relief valve provided in the discharge passage, the relief valve being configured to be opened when a pressure in the discharge passage reaches a predetermined valve opening pressure, the relief valve being configured such that the valve opening pressure is variable in accordance with an input electrical signal; a resistance portion configured to apply resistance to the flow of the hydraulic fluid guided from the supply passage to the discharge passage and passed through the relief valve; and a pressure measurement unit configured to acquire an upstream-downstream differential pressure across the resistance portion, and the controller is configured to: store, in advance, a pressure-flow amount characteristic that is a relationship between a pressure and a passing flow amount in the resistance portion; acquire the flow amount of the hydraulic fluid passing through the resistance portion based on the pressure-flow amount characteristic of the resistance portion and the upstream-downstream differential pressure acquired by the pressure measurement unit; and change at least one of the delivery capacity of the pump and the valve opening pressure of the relief valve in accordance with the flow amount of the hydraulic fluid passing through the resistance portion.

According to one aspect of the present invention, a fluid pressure control system for controlling operation of a fluid pressure actuator, the fluid pressure control system includes: a variable displacement pump configured to deliver hydraulic fluid through a supply passage; a control valve having a neutral position at which the hydraulic fluid delivered from the pump is guided to a tank at a neutral state with no operation input by an operator, the control valve being configured to control a flow of the hydraulic fluid supplied to and discharged from the fluid pressure actuator in accordance with the operation input; and a pump control device configured to control a delivery capacity of the pump, the pump control device has: a discharge passage configured to guide the hydraulic fluid in the supply passage to the tank; a discharge control unit configured to control the flow of the hydraulic fluid discharged to the tank through the discharge passage; and a controller configured to control the delivery capacity of the pump and operation of the discharge control unit in accordance with the operation input by the operator for operating the fluid pressure actuator, the discharge control unit has: a relief valve provided in the discharge passage, the relief valve being configured to be opened when a pressure in the discharge passage reaches a predetermined valve opening pressure, the relief valve being configured such that the valve opening pressure is variable in accordance with an input electrical signal; a resistance portion configured to apply resistance to the flow of the hydraulic fluid guided from the supply passage to the discharge passage and passed through the relief valve; and a pressure measurement unit configured to acquire an upstream-downstream differential pressure across the resistance portion, and the controller is configured to: store, in advance, a pressure-flow amount characteristic that is a relationship between a pressure loss and a passing flow amount in the resistance portion; acquire the flow amount of the hydraulic fluid passing through the resistance portion based on the pressure-flow amount characteristic of the resistance portion and the upstream-downstream differential pressure acquired by the pressure measurement unit; and change at least one of the delivery capacity of the pump and the valve opening pressure of the relief valve in accordance with the flow amount of the hydraulic fluid passing through the resistance portion.

According to one aspect of the present invention, a pump control device for controlling a delivery capacity of a variable displacement pump in a fluid pressure control system, the fluid pressure control system includes the pump configured to deliver hydraulic fluid to a fluid pressure actuator through a supply passage, and a control valve configured to control a flow of the hydraulic fluid supplied to and discharged from the fluid pressure actuator in accordance with an operation input by an operator for driving the fluid pressure actuator, the pump control device includes: a discharge passage configured to guide the hydraulic fluid in the supply passage to a tank; a discharge control unit configured to control the flow of the hydraulic fluid discharged to the tank through the discharge passage; and a controller configured to control the delivery capacity of the pump and operation of the discharge control unit in accordance with the operation input by the operator, the discharge control unit has: a relief valve provided in the discharge passage, the relief valve being configured to be opened when a pressure in the discharge passage reaches a predetermined valve opening pressure, the relief valve being configured such that the valve opening pressure is variable in accordance with an input electrical signal; a resistance portion provided in the discharge passage, the resistance portion being configured to apply resistance to the flow of the hydraulic fluid flowing from the supply passage to the relief valve; a pressure measurement unit configured to acquire an upstream-downstream differential pressure across the resistance portion, and the controller is configured to: store, in advance, a pressure-flow amount characteristic that is a relationship between a pressure and a passing flow amount in the resistance portion; acquire the flow amount of the hydraulic fluid passing through the resistance portion based on the pressure-flow amount characteristic of the resistance portion and the upstream-downstream differential pressure acquired by the pressure measurement unit; and change at least one of the delivery capacity of the pump and the valve opening pressure of the relief valve in accordance with the flow amount of the hydraulic fluid passing through the resistance portion.

### BRIEF DESCRIPTION OF DRAWINGS

[FIG. 1] FIG. 1 is a hydraulic circuit diagram of a fluid pressure control system according to a first embodiment of the present invention.
[FIG. 2] FIG. 2 is a block diagram of the fluid pressure control system according to the first embodiment of the present invention.
[FIG. 3] FIG. 3 is a hydraulic circuit diagram showing a configuration of a relief valve according to the first embodiment of the present invention.
[FIG. 4] FIG. 4 is a graph showing pressure-flow amount characteristic of a downstream restrictor in the first embodiment of the present invention.
[FIG. 5] FIG. 5 is a graph showing pressure-flow amount characteristic of a discharge control unit in the first embodiment of the present invention.
[FIG. 6] FIG. 6 is a flowchart showing a control method according to the first embodiment of the present invention.
[FIG. 7] FIG. 7 is a hydraulic circuit diagram of the fluid pressure control system according to a second embodiment of the present invention.
[FIG. 8] FIG. 8 is a hydraulic circuit diagram of the fluid pressure system according to a comparative example of the present invention.

### DESCRIPTION OF EMBODIMENTS

### (First Embodiment)

In the following, a pump control device 30 according to an embodiment of the present invention and a fluid pressure control system 100 including the same will be described with reference to the drawings. In the following, the pump control device 30 and the fluid pressure control system 100 that are used in construction machinery (for example a hydraulic shovel) will be described as examples.

The fluid pressure control system 100 includes: an operation lever 1 serving as an operation part that is operated by an operator; a hydraulic cylinder 2 serving as a fluid pressure actuator that drives a drive target; a variable displacement pump P that delivers working oil serving as hydraulic fluid; a tank T that stores the working oil; and a fluid pressure control device 10 that controls the operation of the hydraulic cylinder 2.

The operation lever 1 is operated by the operator to drive the hydraulic cylinder 2, and an operation input is input to the fluid pressure control device 10 as an electrical signal (an operation signal) in accordance with the operated direction and operated amount of the operation lever 1. In addition, in accordance with the operated direction and the operated amount of the operation lever 1, a pilot pressure is supplied to a control valve 20 of the fluid pressure control device 10, which will be described later.

The pump P is driven by an engine (not shown) or a motor (not shown) to deliver the working oil. The pump P is, for example, a swash-plate type variable-displacement piston pump whose delivery capacity varies with the change in an inclination of a swash plate controlled by a regulator R. The regulator R controls the inclination of the swash plate of the pump P on the basis of a control signal transmitted from a controller 50 of the pump control device 30 described later. The pump P is configured to deliver the working oil at a certain flow amount even in a state in which the tilting angle of the swash plate is minimal. In other words, the minimum delivery capacity of the pump P becomes a value larger than zero (hereinafter referred to as "the standby flow amount"). Because known configurations are adopted to the configurations of the pump P and the regulator R, detailed description will be omitted.

The hydraulic cylinder 2 is a double acting type cylinder having a piston 4 that partitions an interior of a cylinder tube 3 into a rod side chamber 6 and a bottom-side chamber 7. A piston rod 5 is connected to the piston 4. The working oil is supplied to and discharged from the rod side chamber 6 of the hydraulic cylinder 2 through a rod-side passage 13. The working oil is supplied to and discharged from the bottom-side chamber 7 of the hydraulic cylinder 2 through a bottom-side passage 14.

As the working oil is supplied to the bottom-side chamber 7 and the working oil is discharged from the rod side chamber 6, the hydraulic cylinder 2 is extended. Conversely, as the working oil is supplied to the rod side chamber 6 and the working oil is discharged from the bottom-side chamber 7, the hydraulic cylinder 2 is contracted.

The fluid pressure control device 10 controls a flow of the working oil delivered from the pump P to control the extension and contraction of the hydraulic cylinder 2. The hydraulic cylinder 2 is extended/contracted as the working oil delivered from the pump P is supplied.

The fluid pressure control device 10 includes: the control valve 20 that is provided on a supply passage 11 for guiding the working oil delivered from the pump P and that controls the flow of the working oil supplied to and discharged from the hydraulic cylinder 2; a safety valve 27 that is opened when the pressure in the supply passage 11 reaches a predetermined valve opening pressure (a cracking pressure) and discharges the working oil in the supply passage 11 to the tank T; and the pump control device 30 that controls the flow of the working oil from the pump P toward the control valve 20 through the supply passage 11 and controls the delivery capacity of the pump P.

The control valve 20 is a spool valve having a spool (not shown) and switches positions by movement of the spool.

The control valve 20 has a pair of pilot chambers 21a and 21b and springs 22a and 22b each serving as a biasing member, and is operated in accordance with a pressure difference between the pair of pilot chambers 21a and 21b.

The supply passage 11, a tank passage 12 that communicates with the tank T, a branch supply passage 11a that is branched from the supply passage 11, a branch tank passage 12a that is branched from the tank passage 12, the rod-side passage 13, and the bottom-side passage 14 are connected to the control valve 20. The supply passage 11 and the tank passage 12 form a center bypass passage that guides the working oil delivered from the pump P to the tank T. The branch supply passage 11a is formed with a check valve 25 that allows the flow of the working oil from the pump P toward the control valve 20 and restricts the opposite flow.

The control valve 20 has: a neutral position 20A at which the supply passage 11 is communicated with the tank passage 12 to open the center bypass passage; a extending position 20B serving as an operating position at which the branch supply passage 11a is communicated with the bottom-side passage 14 and the branch tank passage 12a is communicated with the rod side chamber 6; and a contracting position 20C serving as the operating position at which the branch supply passage 11a is communicated with the rod-side passage 13 and the branch tank passage 12a is communicated with the bottom-side passage 14.

In a state in which the operation lever 1 is not operated by the operator, the pilot pressure is not guided to the pair of pilot chambers 21a and 21b of the control valve 20, and the control valve 20 is held at the neutral position 20A by the pair of springs 22a and 22b. At the neutral position 20A, the rod-side passage 13, the bottom-side passage 14, the branch supply passage 11a, and the branch tank passage 12a are respectively shut off. Thus, the hydraulic cylinder 2 is not extended/contracted and is maintained in a load holding state. In addition, the working oil delivered from the pump P is guided to the tank T by being guided to the tank passage 12 from the supply passage 11 through the control valve 20.

When the operation lever 1 is operated in the one direction by the operator, the pilot pressure is guided to the first pilot chamber 21a of the control valve 20 in accordance with the operated amount of the operation lever 1, and the position of the control valve 20 is switched to the extending position 20B. At the extending position 20B, the communication between the supply passage 11 and the tank passage 12 is shut off, and the center bypass passage is closed. When the control valve 20 is switched to the extending position 20B, the working oil delivered from the pump P is supplied to the bottom-side chamber 7 through the branch supply passage 11a and the bottom-side passage 14. The working oil in the rod side chamber 6 is discharged to the tank T through the rod-side passage 13 and the branch tank passage 12a. As a result, the hydraulic cylinder 2 is extended.

When the operation lever 1 is operated in the other direction by the operator, the pilot pressure is guided to the second pilot chamber 21b of the control valve 20 in accordance with the operated amount of the operation lever 1, and the control valve 20 is switched to the contracting position 20C. At the contracting position 20C, the communication between the supply passage 11 and the tank passage 12 is shut off, and the center bypass passage is closed. When the control valve 20 is switched to the contracting position 20C, the working oil delivered from the pump P is supplied to the rod side chamber 6 through the branch supply passage 11a and the rod-side passage 13. The working oil in the bottom-side chamber 7 is discharged to the tank T through the bottom-side passage 14 and the branch tank passage 12a. As a result, the hydraulic cylinder 2 is contracted.

The pump control device 30 includes: a discharge passage 15 that guides the working oil in the supply passage 11 to the tank T; a discharge control unit 31 that controls the flow of the hydraulic fluid discharged to the tank T through the discharge passage 15; and the controller 50 that controls the delivery capacity of the pump P and the operation of the discharge control unit 31 in accordance with the operation input by the operator for operating the hydraulic cylinder 2.

The discharge control unit 31 has: a relief valve 40 that is provided in the discharge passage 15, that is opened when the pressure in the discharge passage 15 reaches a predetermined valve opening pressure, and that has variable valve opening pressure; a downstream restrictor 32 serving as a resistance portion that applies resistance to the flow of the working oil guided from the supply passage 11 to the discharge passage 15 and passed through the relief valve 40; an upstream restrictor 33 serving as an additional resistance portion that is provided in the discharge passage 15 and that applies resistance to the flow of the working oil flowing from the supply passage 11 toward the relief valve 40; and a pressure measurement unit 34 for acquiring the upstream-downstream differential pressure across the downstream restrictor 32.

The relief valve 40 is an electromagnetic relief valve having a set spring 40a serving as a biasing member for setting the valve opening pressure and a solenoid 40b that generates electromagnetic force by energization. By an electromagnetic force generated by the solenoid 40b in response to the electrical signal (a valve opening pressure signal) input from the controller 50, a plunger (not shown) is moved to extend and compress the set spring 40a, and thereby, the valve opening pressure of the relief valve 40 is adjusted. The valve opening pressure of the relief valve 40 is set to be at least higher than the tank pressure. The working oil that has passed through the upstream restrictor 33 and the working oil that has passed through the downstream restrictor 32 (the tank pressure) are respectively guided to the relief valve 40 as the pilot pressures. The relief valve 40 is opened when the differential pressure between the pressure between the upstream restrictor 33 and the relief valve 40 (the downstream pressure of the upstream restrictor 33, in other words, the upstream pressure of the relief valve 40) and the tank pressure (hereinafter referred to as "the upstream-downstream differential pressure" across the relief valve 40) reaches the valve opening pressure and opens the discharge passage 15. Note that in a state in which the relief valve 40 is closed, the upstream pressure of the relief valve 40 is equal to the upstream pressure of the upstream restrictor 33 (and hence, the pressure in the supply passage 11), and so, the relief valve 40 is substantially opened when the differential pressure between the upstream pressure of the upstream restrictor 33 and the tank pressure reaches the valve opening pressure. In a state in which the relief valve 40 is opened, the relief valve 40 is operated by using, as the pilot pressure, the differential pressure between the tank pressure and the pressure at the downstream side of the upstream restrictor 33 that is the pressure at the upstream side of the relief valve 40.

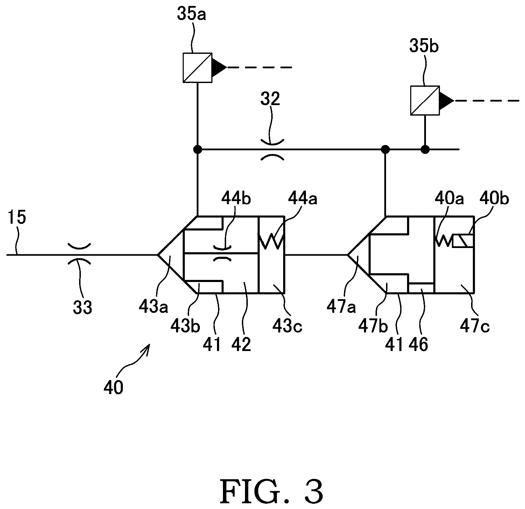

The configuration of the relief valve 40 will be described in detail with reference to FIG. 3. As shown in FIG. 3, the relief valve 40 has: housings 41; a main poppet 42 and a pilot poppet 46 that are respectively provided in the housings 41; a main spring 44a serving as a biasing member that biases the main poppet 42 in the valve closing direction; the set spring 40a that biases the pilot poppet 46 in the valve closing direction; and the solenoid 40b that extends and compresses the set spring 40a.

The main poppet 42 defines a first upstream chamber 43a, a first downstream chamber 43b, and a first pilot chamber 43c in the housing 41. The first upstream chamber 43a communicates with the discharge passage 15 on the downstream side of the upstream restrictor 33, and the working oil in the discharge passage 15 that has passed through the upstream restrictor 33 is guided to the first upstream chamber 43a. The first downstream chamber 43b communicates with the discharge passage 15 on the upstream side of the downstream restrictor 32, and the working oil in the downstream restrictor 32 is guided to the downstream restrictor 32. When the main poppet 42 is in a valve closed state, the communication between the first upstream chamber 43a and the first downstream chamber 43b is shut off by the main poppet 42, and when the main poppet 42 is opened, the first upstream chamber 43a and the first downstream chamber 43b are communicated. The first pilot chamber 43c constantly communicates with the first upstream chamber 43a through a poppet restrictor 44b. The pressure receiving area for the first upstream chamber 43a when the main poppet 42 is closed is set so as to be the same as or smaller than the pressure receiving area for the first pilot chamber 43c.

The pilot poppet 46 defines a second upstream chamber 47a, a second downstream chamber 47b, and a second pilot chamber 47c in the housing 41. The second upstream chamber 47a constantly communicates with the first pilot chamber 43c that is defined by the main poppet 42. The second downstream chamber 47b communicates with the discharge passage 15 on the downstream side of the downstream restrictor 32 and communicates with the tank T through the discharge passage 15. When the pilot poppet 46 is in a valve closed state, the communication between the second upstream chamber 47a and the second downstream chamber 47b is shut off by the pilot poppet 46, and when the pilot poppet 46 is opened, the second upstream chamber 47a and the second downstream chamber 47b are communicated. The second pilot chamber 47c constantly communicates with the second downstream chamber 47b. The pressure receiving area of the pilot poppet 46 for the second upstream chamber 47a is set so as to be smaller than the pressure receiving area of the pilot poppet 46 for the second pilot chamber 47c. The set spring 40a and the solenoid 40b are accommodated in the second pilot chamber 47c. The pilot poppet 46 is biased in the valve closing direction by the biasing force exerted by the set spring 40a and the actuating force exerted by the solenoid 40b.

The working oil that has passed through the upstream restrictor 33 of the discharge passage 15 is guided to the second upstream chamber 47a through the poppet restrictor 44b. The second downstream chamber 47b communicates with the tank T via the discharge passage 15. When the actuating force exerted to the pilot poppet 46 by the pressure guided to the second upstream chamber 47a is equal to or lower than a resultant force of the actuating force exerted by the pressure in the second pilot chamber 47c (the tank pressure) and the actuating force exerted by the solenoid 40b and the set spring 40a, the pilot poppet 46 is closed. In a state in which the pilot poppet 46 is closed, the working oil in the first pilot chamber 43c is not discharged to the tank T, and so, the main poppet 42 is also in a closed state.

When the actuating force exerted to the pilot poppet 46 by the pressure in the second upstream chamber 47a is greater than the resultant force of the actuating force exerted by the pressure in the second pilot chamber 47c (the tank pressure) and the actuating force exerted by the solenoid 40b and the set spring 40a, the pilot poppet 46 is opened. As a result, the working oil in the first pilot chamber 43c is guided from the second upstream chamber 47a to the second downstream chamber 47b, and then discharged from the discharge passage 15 to the tank T. As a result, the main poppet 42 (and hence, the relief valve 40) is opened by the pressure in the first upstream chamber 43a, and the working oil in the discharge passage 15 is discharged to the tank T through the relief valve 40. As described above, the relief valve 40 is opened when the differential pressure (the upstream-downstream differential pressure) between the pressure on the downstream side of the upstream restrictor 33 in the discharge passage 15 and the pressure on the downstream side of the downstream restrictor 32 (the tank pressure) reaches a predetermined valve opening pressure, and thereby, the working oil in the discharge passage 15 is discharged to the tank T.

As described above, the valve opening pressure of the relief valve 40 determined according to, in addition to the actuating force by the set spring 40a and the solenoid 40b, the difference in the pressure receiving areas between the first upstream chamber 43a and the first pilot chamber 43c with respect to the main poppet 42, the difference in the pressure receiving areas between the second upstream chamber 47a and the second pilot chamber 47c with respect to the pilot poppet 46, the poppet restrictor 44b, the main spring 44a, and so forth.

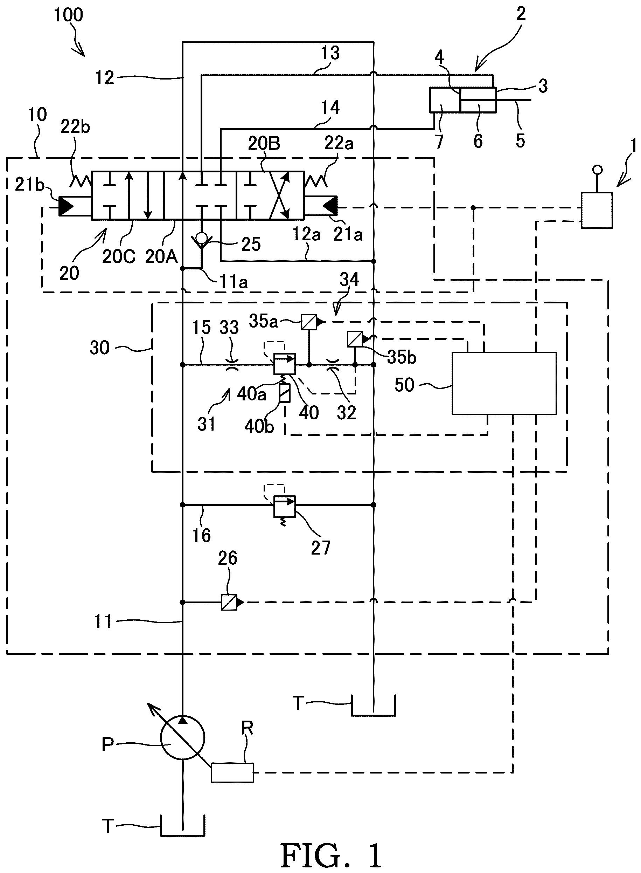

Note that the configuration of the relief valve 40 is not limited to that shown in FIG. 3. Any configuration capable of realizing the functions of the relief valve 40 described in this specification and capable of being represented by circuit symbols such as those shown in FIG. 1 may be adopted as the relief valve 40.

The upstream restrictor 33 and the downstream restrictor 32 are fixed restrictors each configured, for example, by an orifice or the like. The upstream restrictor 33 and the downstream restrictor 32 may also be a flow path resistance (a piping resistance) formed by the flow path (the piping) that forms the discharge passage 15 as the fixed restrictor.

The pressure measurement unit 34 has: a pressure sensor 35a serving as an upstream pressure measurement unit that measures the pressure of the working oil guided from the relief valve 40 to the downstream restrictor 32; and a tank pressure sensor 35b serving as a tank pressure measurement unit that measures the pressure in the discharge passage 15 on the downstream side of the downstream restrictor 32. The pressure sensor 35a measures the pressure between the relief valve 40 and the downstream restrictor 32 in the discharge passage 15 (in other words, the upstream pressure of the downstream restrictor 32). The measurement result obtained by the pressure sensor 35a is input to the controller 50.

The tank pressure sensor 35b measures the pressure on the downstream side of the downstream restrictor 32 that is to be guided to the relief valve 40 as the pilot pressure. The measurement result obtained by the tank pressure sensor 35b is input to the controller 50. Note that the tank pressure sensor 35b may measure the pressure in the tank passage 12 or the pressure inside the tank T. A difference between the pressure measured by the pressure sensor 35a and the pressure measured by the tank pressure sensor 35b becomes the upstream-downstream differential pressure across the downstream restrictor 32.

In addition, the supply passage 11 is formed with a second pressure sensor 26 that acquires the pressure in the supply passage 11. The measurement result obtained by the second pressure sensor 26 is input to the controller 50.

The controller 50 is configured of a computer provided with a CPU (a central processing unit), a ROM (a read-only memory), a RAM (random-access memory), and an I/O interface (an input-output interface). The RAM stores data processed by the CPU, the ROM stores a control program, etc. of the CPU in advance, and the I/O interface is used for input/output of information with connected devices. The controller 50 is programmed to be capable of executing at least a process necessary for executing the control according to this embodiment and modifications. Note that the controller 50 may be configured as a single device, or may be configured to be divided into a plurality of devices such that respective controls are executed by the plurality of devices in distributed processing. In addition, the controller 50 may also be used in common with other controllers provided in the construction machinery.

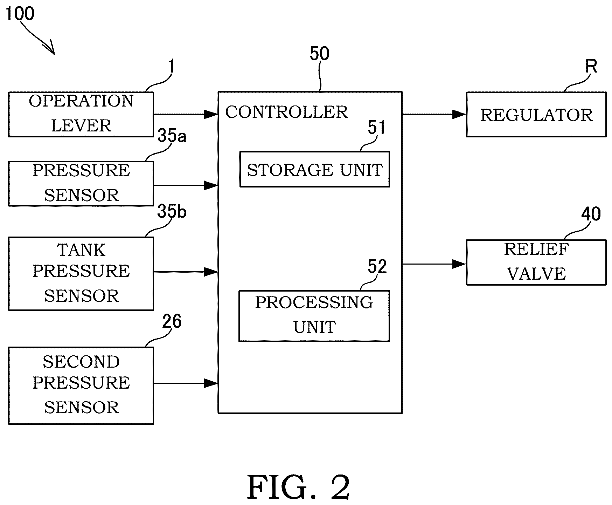

As shown in FIG. 2, the controller 50 has: a storage unit 51 that stores information necessary to control the delivery capacity of the pump P in advance; and a processing unit 52 that executes processing for controlling the delivery capacity of the pump P.

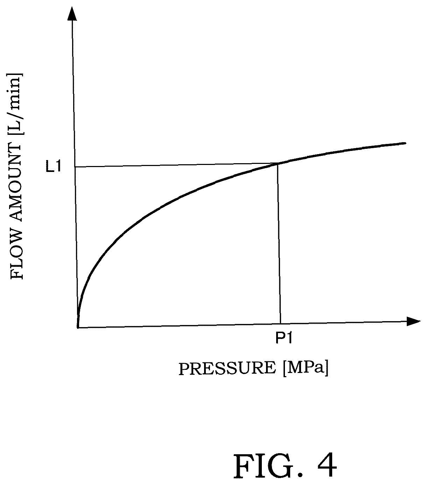

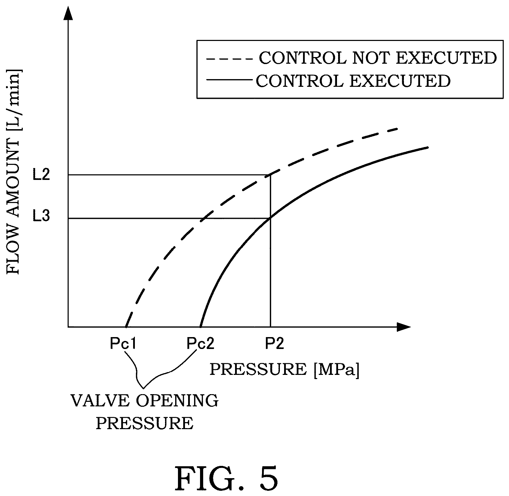

In the storage unit 51, a relationship between the operated amount of the operation lever 1 and the delivery capacity of the pump P (not shown), the pressure-flow amount characteristic showing a relationship between the pressure and the flow amount of the working oil passing through the downstream restrictor 32 alone (see FIG. 4), and the pressure-flow amount characteristic of the entire discharge control unit 31 (see FIG. 5) are stored in advance. Normally, the pressure-flow amount characteristic of the relief valve 40 is the characteristic in which the passing flow amount is increased rapidly when the pressure reaches the valve opening pressure. In contrast, because the restrictors (the upstream restrictor 33 and the downstream restrictor 32) are provided on the upstream side and the downstream side of the relief valve 40, the pressure-flow amount characteristic of the discharge control unit 31 becomes the characteristic in which the passing flow amount is increased gradually with the increase in the pressure in the pressure region equal to or higher than the valve opening pressure of the relief valve 40 as shown in FIG. 5. In other words, the pressure-flow amount characteristic of the discharge control unit 31 has a smaller slope of a flow amount change with a pressure change than the pressure-flow amount characteristic of a general relief valve. As described above, the pressure-flow amount characteristic of the discharge control unit 31 is determined according to the respective pressure-flow amount characteristics of the relief valve 40, the downstream restrictor 32, and the upstream restrictor 33. The relationship between the operated amount of the operation lever 1 and the delivery capacity of the pump P and the pressure-flow amount characteristics of the discharge control unit 31 and the downstream restrictor 32 are stored in the storage unit 51 in a format such as a map, for example.

The operation signal transmitted from the operation lever 1 in response to the operation input from the operation lever 1 operated by the operator; and the pressure signals indicating respective measurement values input from the pressure sensor 35a, the tank pressure sensor 35b, and the second pressure sensor 26 are input to the controller 50. The processing unit 52 calculates the upstream-downstream differential pressure across the relief valve 40 from the pressure signals from the pressure sensor 35a and the tank pressure sensor 35b. In addition, the processing unit 52 controls the delivery capacity of the pump P and the valve opening pressure of the relief valve 40 on the basis of the operation signal from the operation lever 1 and the pressure signals from the pressure sensor 35a, the tank pressure sensor 35b, and the second pressure sensor 26.

In the following, a control method of the delivery capacity of the pump P in the present embodiment will be described.

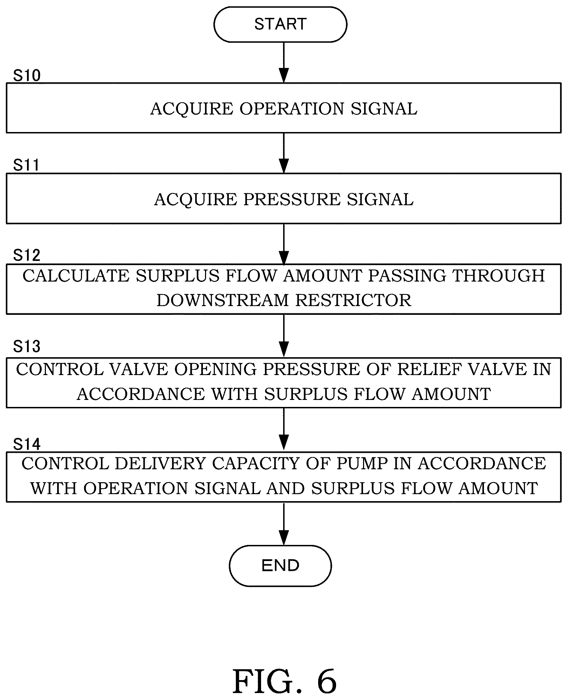

In the following, the control method of the present embodiment will be described with reference to the flowchart shown in FIG. 6. The controller 50 executes processing shown in FIG. 6 at a predetermined execution interval.

In Step S10, the operation signal from the operation lever 1 operated by the operator is acquired.

In Step S11, the pressure signals that are the measurement results obtained by the pressure sensor 35a and the tank pressure sensor 35b of the discharge control unit 31 are acquired.

Here, in a state in which the operation lever 1 is not operated by the operator and the control valve 20 is positioned at the neutral position 20A, the working oil delivered from the pump P is guided to the tank T through the center bypass passage (the supply passage 11 and the tank passage 12). Thus, the pressure in the discharge passage 15 does not reach the valve opening pressure of the relief valve 40, and so, the relief valve 40 is in the closed state, and the working oil delivered from the pump P does not pass through the downstream restrictor 32.

The pressure in the supply passage 11 is determined in accordance with the pressure of the working oil required for the hydraulic cylinder 2 (a load pressure). In a case in which the load pressure for the hydraulic cylinder 2 is relatively low even when the operation lever 1 is operated by the operator and the control valve 20 is switched to the operating position (the extending position 20B, the contracting position 20C), the pressure in the supply passage 11 does not reach the valve opening pressure of the relief valve 40 of the discharge control unit 31. For this reason, the relief valve 40 is in the closed state, and the working oil delivered from the pump P does not pass through the downstream restrictor 32.

Therefore, in a case in which the operation lever 1 is not operated and in a case in which the required pressure of the hydraulic cylinder 2 is low (a case in which the required pressure is lower than the valve opening pressure of the relief valve 40), in Step S11, the pressure signal indicating the tank pressure is input to the controller 50 from the pressure sensor 35a.

When the operation lever 1 is operated by the operator and the working oil is supplied from the pump P to the hydraulic cylinder 2, the pressure in the supply passage 11 is increased by a driving pressure in accordance with the load acting on the hydraulic cylinder 2 from the drive target. When the pressure in the supply passage 11 reaches the valve opening pressure of the relief valve 40, the relief valve 40 is opened, and a part of the working oil delivered from the pump P is discharged to the tank T from the relief valve 40 through the downstream restrictor 32 (as a surplus flow amount is generated). As described above, the surplus flow amount for the hydraulic cylinder 2 is discharged to the tank T. Thus, in this case, in Step S11, the pressure signal indicating the pressure of the working oil of the surplus flow amount is input to the controller 50 from the pressure sensor 35a.

In Step S12, the flow amount (the surplus flow amount) through the downstream restrictor 32 is calculated on the basis of the pressure signal acquired in Step S11. It is possible to calculate the surplus flow amount by calculating the upstream-downstream differential pressure P1 across the relief valve 40 from the pressure signals from the pressure sensor 35a and the tank pressure sensor 35b acquired in Step S11, and by reading the passing flow amount L1 of the downstream restrictor 32 at the upstream-downstream differential pressure P1 from the pressure-flow amount characteristic shown in FIG. 4.

For the pressure inside the tank T, a certain level of pressure fluctuation may be caused because the working oil discharged from the hydraulic cylinder 2 is guided to the tank T. In contrast, in the present embodiment, the pressure in the discharge passage 15 on the downstream side of the downstream restrictor 32 is measured as the tank pressure, and the passing flow amount for the downstream restrictor 32 is calculated by calculating the upstream-downstream differential pressure across the relief valve 40 from thus-measured tank pressure. Because the passing flow amount for the downstream restrictor 32 is calculated on the basis of the actually measured tank pressure, it is possible to improve a calculation accuracy. Note that the tank pressure sensor 35b is not an essential configuration, and the passing flow amount for the downstream restrictor 32 may be calculated on the basis of the tank pressure grasped in advance without providing the tank pressure sensor 35b.

In a case in which the operation lever 1 is not operated and in a case in which the required pressure of the hydraulic cylinder 2 is low, as described above, the relief valve 40 is not opened, and the pressure signal corresponding to the tank pressure is input to the controller 50. Thus, in these cases, in Step S12, the surplus flow amount is calculated as zero.

In a case in which the relief valve 40 is opened, the pressure signal indicating the pressure greater than the tank pressure is input to the pressure sensor 35a. Therefore, in Step S12, the flow amount of the working oil passed through the downstream restrictor 32 (in other words, the surplus flow amount to be discharged to the tank T) is calculated on the basis of the pressure signal and the pressure-flow amount characteristic of the downstream restrictor 32 (see FIG. 4).

In Step S13, the valve opening pressure signal to be input to the relief valve 40 is controlled in accordance with the surplus flow amount obtained in Step S12.

In a case in which the surplus flow amount is calculated as zero in Step S12, in Step S13, control is performed so as to maintain (so as not to change) the valve opening pressure of the relief valve 40.

In a case in which the surplus flow amount is calculated to be larger than zero in Step S12, in Step S13, for example as shown in FIG. 5, the valve opening pressure of the relief valve 40 is increased from Pc1 to Pc2 by an amount corresponding to the surplus flow amount.

In Step S14, the delivery capacity of the pump P is controlled in accordance with the operation signal acquired in Step S10 and the surplus flow amount calculated in Step S12.

In a case in which the operation lever 1 is not operated and the surplus flow amount is zero, in Step S14, control is performed such that the delivery capacity of the pump P becomes minimum. As described above, in a state in which the control valve 20 is positioned at the neutral position 20A, the working oil at the standby flow amount is delivered from the pump P and is guided to the tank T through the center bypass passage.

In a case in which the surplus flow amount is calculated as zero in Step S12 even though the operation lever 1 is operated, the delivery capacity of the pump P is determined only in accordance with the operated amount of the operation lever 1 in Step S14. In other words, in a state in which the relief valve 40 is closed, the controller 50 performs the control such that the delivery capacity of the pump P is increased as the operation input from the operation lever 1 is increased.

When the operation lever 1 is operated and the surplus flow amount greater than zero is discharged to the tank T through the discharge passage 15, in Step S14, the delivery capacity of the pump P calculated from the operated amount of the operation lever 1 is corrected according to the surplus flow amount. Then, the pump P is controlled to achieve the delivery capacity corrected according to the surplus flow amount. Specifically, the pump P is controlled such that the delivery capacity is decreased by an amount corresponding to the surplus flow amount from the delivery capacity of the pump P corresponding to the current operated amount of the operation lever 1.

By increasing the valve opening pressure of the relief valve 40 in Step S13, and by decreasing the delivery flow amount of the pump P in Step S14, it is possible to reduce the surplus flow amount discharged through the discharge passage 15 while maintaining the flow amount of the working oil supplied to the hydraulic cylinder 2 (while preventing change in the flow amount supplied). In other words, it is possible to prevent a change in the operation state of the hydraulic cylinder 2 due to the increase in the valve opening pressure of the relief valve 40 by maintaining the supply flow amount to the hydraulic cylinder 2 while reducing the surplus flow amount of the pump P.

To explain in more detail, for example, as shown in FIG. 5, in a state in which the control of the present embodiment is not executed, when the valve opening pressure of the relief valve 40 is Pc1 and the delivery pressure of the pump P (the pressure in the supply passage 11) is P2, the relief valve 40 is opened and the working oil is discharged to the tank T through the discharge passage 15 at the flow amount L2. When the control of the present embodiment is executed, and the valve opening pressure of the relief valve 40 is increased from Pc1 to Pc2 in Step S13 (Pc2 > Pc1), the pressure-flow amount characteristic of the relief valve 40 is changed from the state indicated by a broken line to the state indicated by a solid line. At this time, assuming that the load of the hydraulic cylinder 2 does not change, if the delivery capacity of the pump P is maintained, the flow amount of the working oil supplied to the hydraulic cylinder 2 is increased by an amount corresponding to the decrease in the surplus flow amount from L2 to L3. As a result, despite the absence of the operation of the operation lever 1 and the change in the load of the hydraulic cylinder 2, the speed of the hydraulic cylinder 2 is increased.

Thus, in the present embodiment, by decreasing the delivery capacity of the pump P along with increasing the valve opening pressure of the relief valve 40, it is possible to suppress the increase in the supply flow amount of the working oil to the hydraulic cylinder 2 caused by the increase in the valve opening pressure of the relief valve 40. Specifically, when the delivery pressure of the pump P is P2, the delivery capacity of the pump P is decreased by an amount corresponding to a difference between the flow amount L2 before execution of the control and the flow amount L3 after execution of the control (L2>L3), and thereby, it is possible to maintain the supply flow amount to the hydraulic cylinder 2. As described above, according to the control of the present embodiment, it is possible to reduce the surplus flow amount discharged through the discharge passage 15 to reduce the energy consumed by the pump P while maintaining the workload performed by the pump P.

Note that how much the valve opening pressure of the relief valve 40 is to be increased relative to generated surplus flow amount can be set arbitrarily. For example, the relief valve 40 may be closed by setting the valve opening pressure of the relief valve 40 so as to be equal to or higher than the pressure at the start of the control (P2 in the example shown in FIG. 5). Alternatively, as described in FIG. 5, by setting the valve opening pressure of the relief valve 40 so as to be lower than the pressure P2 at the start of the control, a predetermined surplus flow amount (the flow amount L3) may be allowed to be generated even after the control.

As described above, in the present embodiment, the valve opening pressure of the relief valve 40 and the delivery capacity of the pump P are controlled on the basis of the flow amount passing through the discharge control unit 31 (the surplus flow amount) in addition to the operated amount of the operation lever 1.

Note that, when the pressure in the supply passage 11 reaches the valve opening pressure of the safety valve 27 that is higher than the valve opening pressure of the relief valve 40, the safety valve 27 is opened to discharge a part of the working oil in the supply passage 11 to the tank passage 12. As a result, it is possible to protect the entire system regardless of the valve opening pressure of the relief valve 40.

In addition, in addition to the control described above, the controller 50 executes horsepower control that controls the delivery capacity of the pump P on the basis of the pressure signal from the second pressure sensor 26 such that the load of an engine or the like that drives the pump P does not exceed an allowable limit. Because the horsepower control is of a known configuration, detailed description thereof is omitted.

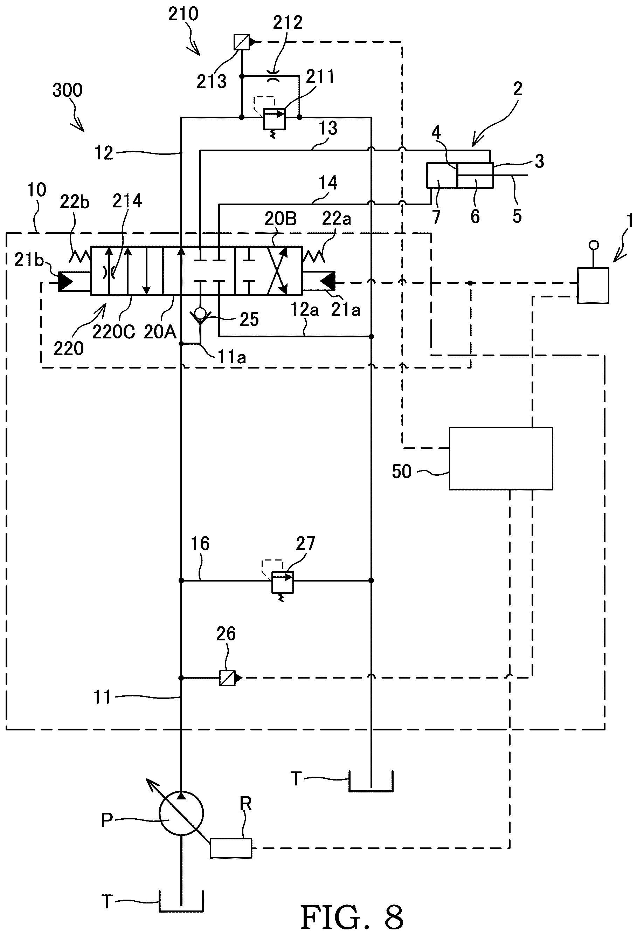

Here, to facilitate understanding of the present invention, a comparative example of the present invention will be described with reference to FIG. 8. Note that, in the comparative example, configurations that are similar to those in the above-mentioned embodiment are assigned the same reference signs as those in the above-mentioned embodiment, and descriptions thereof shall be omitted.

A fluid pressure control system 300 according to the comparative example controls the delivery capacity of the pump P by so-called negative control. The fluid pressure control system 300 has a negative-control control unit 210 that is provided on the downstream side of a control valve 220 instead of the discharge control unit 31 of the present embodiment.

The negative-control control unit 210 has: a negative-control relief valve 211 that is provided in the tank passage 12 on the downstream side of the control valve 220; a negative-control restrictor 212 that is provided in parallel with the negative-control relief valve 211; and a pressure sensor 213 that measures the upstream pressure of the negative-control restrictor 212 (the pressure between the control valve 220 and the negative-control restrictor 212).

In addition, in the fluid pressure control system 300 of the comparative example, at a contracting position 220C of the control valve 220, the center bypass passage is not shut off by the control valve 220 and is opened through a control restrictor 214. In other words, when the control valve 220 is positioned at the contracting position 220C, a part of the working oil delivered from the pump P is guided to the tank passage 12 from the supply passage 11 through the control restrictor 214 of the control valve 220 and discharged to the tank T. Although not shown in the figure, the control restrictor 214 is formed by, for example, cutting a groove-shaped notch in an outer periphery of the land portion of the spool of the control valve 220.

In a case in which the hydraulic cylinder 2 is operated by positioning the control valve 220 at the contracting position 220C, unlike the extending position 20B at which the center bypass passage is shut off, a part of the delivery flow amount of the pump P passes through the control restrictor 214 of the control valve 220 and is guided to the negative-control control unit 210. Therefore, the upstream pressure of the negative-control restrictor 212 is increased. Here, when the load of the hydraulic cylinder 2 is changed, even if the restricted amount by the control restrictor 214 is constant, the flow amount supplied to the hydraulic cylinder 2 and the flow amount passing through the control restrictor 214 are changed, and the upstream pressure of the negative-control restrictor 212 is also changed. As described above, the flow amount of the working oil passing through the control restrictor 214 is a flow quantity that is not used by the operation of the hydraulic cylinder 2, and forms a part of energy loss.

The controller 50 controls the delivery capacity of the pump P on the basis of the upstream pressure of the negative-control restrictor 212 that is input from the pressure sensor 213 of the negative-control control unit 210 (the negative control). The pressure-flow amount characteristic of the negative-control restrictor 212 is stored in the controller 50 in advance, and it is possible to calculate the passing flow amount of the negative-control restrictor 212 from the pressure of the pressure sensor 213 and the pressure-flow amount characteristic of the negative-control restrictor 212.

In a state in which the control valve 220 is positioned at the neutral position 20A, the working oil delivered from the pump P is discharged to the tank T through the negative-control restrictor 212 of the center bypass passage.

When the control valve 220 is switched to the contracting position 220C, a part of the working oil delivered from the pump P is supplied to the hydraulic cylinder 2 through the control valve 220. As a result, the flow amount passing through the negative-control restrictor 212 is reduced. Thus, the controller 50 increases the delivery capacity of the pump P on the basis of the upstream pressure of the negative-control restrictor 212 that is lowered in response to the reduction in the flow amount passing through the negative-control restrictor 212.

In addition, in the negative control, by providing the negative-control control unit 210 in the tank passage 12, even in a state in which the control valve 220 is positioned at the neutral position 20A, the working oil delivered from the pump P is discharged to the tank T through the negative-control restrictor 212. Thus, even in a state in which the control valve 220 is positioned at the neutral position 20A and in a state in which the pump P delivers the working oil at the standby flow amount, energy required to allow passage of the working oil through the negative-control restrictor 212 at the standby flow amount is consumed.

In contrast, in the present embodiment, the valve opening pressure of the relief valve 40 of the pump control device 30 is adjustable, and the delivery capacity of the pump P is controllable in accordance with the flow amount passing through the downstream restrictor 32. Therefore, even in a case in which the required pressure of the hydraulic cylinder 2 and the operated amount of the operation lever 1 are the same, by adjusting the valve opening pressure of the relief valve 40, it is possible to adjust the pressure in the supply passage 11, and the flow amount of the working oil discharged to the tank T through the discharge passage 15, and hence the flow amount supplied to the hydraulic cylinder 2. Therefore, it is possible to realize diverse control for the hydraulic cylinder 2.

In addition, in the present embodiment, the negative control is not performed, and the surplus flow amount of the pump P is discharged to the tank T through the discharge passage 15 that is branched from the supply passage 11 on the upstream side of the control valve 20, and the surplus flow amount is controlled by the discharge control unit 31. In a state in which the control valve 20 is positioned at the neutral position 20A, the working oil delivered from the pump P is discharged to the tank T through the center bypass passage in which the negative-control restrictor 212 is not provided. Therefore, according to the present embodiment, it is possible to suppress the energy loss caused by the passage of the working oil through the negative-control restrictor 212.

In addition, in the present embodiment, the control valve 20 has the configuration in which the center bypass passage is shut off at the operating position (the extending position 20B and the contracting position 20C), and does not have the configuration in which the center bypass passage is opened through the control restrictor 214 at the operating position as in the comparative example. In the present embodiment, instead of the control restrictor 214 of the control valve 220 as in the comparative example, the valve opening pressure of the relief valve 40 is controlled, and thereby, it is possible to alleviate a sudden pressure change of the working oil supplied from the pump P to the hydraulic cylinder 2. Thus, in the present embodiment, it is possible to eliminate the control restrictor 214 in the control valve 20, and so, simplification of the structure of the control valve 20, reduction of man-hours for forming the control restrictor 214, and cost reduction can be achieved.

Note that, from the viewpoint of reducing the energy loss, in the process of switching from the neutral position 20A to the operating position, it is desirable that timing at which the supply passage 11 and the tank passage 12 are shut off from each other (the center bypass passage is shut off) be earlier than or simultaneous with timing at which the branch supply passage 11a communicates with the rod-side passage 13 or the bottom-side passage 14. Thereby, it becomes possible to control (reduce), through the control valve 20, a leakage amount of the working oil discharged from the pump P to the tank T in an operation other than the operation of the hydraulic cylinder 2 at pressures equal to or lower than the valve opening pressure of the safety valve 27, and so, it is possible to reduce the energy loss to the maximum extent. In addition, in such a case, it is not necessary to form a configuration such as the notch or the like forming the control restrictor 214 of the comparative example on the land portion of the spool of the control valve 20 that shuts off the communication between the supply passage 11 and the tank passage 12, and so, it is possible to achieve simplification of the structure of the control valve 20 and the like.

On the other hand, when the supply passage 11 and the tank passage 12 are shut off from each other earlier than or simultaneously with the timing at which the branch supply passage 11a communicates with the rod-side passage 13 or the bottom-side passage 14, there may be a case in which an instantaneous pressure increase in the supply passage 11 cannot be avoided. When it is desired to avoid such a pressure increase in the supply passage 11, the timing at which the supply passage 11 and the tank passage 12 are shut off from each other may be later than the timing at which the branch supply passage 11a communicates with the rod-side passage 13 or the bottom-side passage 14. In other words, as a transition state between a state in which the control valve 20 is positioned at the neutral position 20A and the supply passage 11 and the tank passage 12 are communicated and a state in which the control valve 20 is switched to the operating position and the supply passage 11 and the tank passage 12 are shut off from each other, a state in which the supply passage 11 and the tank passage 12 are communicated and the branch supply passage 11a communicates with the rod-side passage 13 or the bottom-side passage 14 may be temporarily caused. According to such a case, even in the operation state of the hydraulic cylinder 2, the sudden pressure increase in the supply passage 11 is suppressed regardless of the valve opening pressure of the relief valve 40, and it is possible to achieve a gradual pressure increase. In the transition state, the hydraulic cylinder 2 is in a stopped state without operation or in a slightly operated state. Then, when the supply passage 11 and the tank passage 12 are completely shut off from each other, the pressure of the working oil guided to the supply passage 11, and hence to the hydraulic cylinder 2 is increased, and the hydraulic cylinder 2 is operated.

In addition, in such a transition state, the supply passage 11 and the tank passage 12 may be communicated via a restrictor such as a notch or the like (hereinafter referred to as "a communication restrictor"). Such a communication restrictor is formed, for example, in the land portion of the spool of the control valve 20 that shuts off the communication between the supply passage 11 and the tank passage 12 at the operating position. As a result, it is possible to suppress the sudden pressure increase in the supply passage 11 and to suppress the leakage to the tank T of the working oil to be supplied to the hydraulic cylinder 2.

Although the position where the communication restrictor is formed in the spool of the control valve 20 is the same position as the control restrictor 214 of the comparative example, it does not communicate the supply passage 11 (the branch supply passage 11a) and the tank passage 12 at the operating position and does not control the flow amount of the working oil discharged from the pump P to the tank T during the operation of the hydraulic cylinder 2. Therefore, compared with the control restrictor 214 of the comparative example, a processing range of the spool (length, width, depth, etc. of the notch) is small and processing amount is small. Thus, even if the communication restrictor is provided, compared with the comparative example, it is possible to simplify the configuration of the control valve 20 and reduce processing man-hours.

Next, modifications of the present embodiment will be described. The following modifications also fall within the scope of the present invention, and it is also possible to combine the configurations shown in the modifications with the configurations described in the above embodiment, or to combine the configurations described in the following different modifications with each other.

In the above-described embodiment, the controller 50 stores the pressure-flow amount characteristic of the entire discharge control unit 31 and the downstream restrictor 32. In contrast, the controller 50 may store the pressure-flow amount characteristics of the discharge control unit 31 and the downstream restrictor 32 for each predetermined temperature range, and may use the pressure-flow amount characteristics of the discharge control unit 31 and the downstream restrictor 32 in accordance with the temperature of the working oil. In this case, it suffices to employ a configuration in which the temperature of the working oil is measured by a temperature sensor, and the measured temperature is input to the controller 50. By using the pressure-flow amount characteristic in accordance with the temperature of the working oil, it is possible to accurately calculate the flow amount passing through the downstream restrictor 32.

In addition, in the above-described embodiment, when the surplus flow amount passing through the discharge control unit 31 is increased, the controller 50 increases the valve opening pressure of the relief valve 40 and reduces the delivery capacity of the pump P. Thereby, it is possible to achieve energy saving by reducing the surplus flow amount while maintaining the pressure required for the hydraulic cylinder 2. In contrast, the control of the valve opening pressure of the relief valve 40 and the delivery capacity of the pump P performed by the controller 50 is not limited to the configuration of the above-described embodiment. The configuration of the controller 50 is not limited to the that in which both of the valve opening pressure of the relief valve 40 and the delivery capacity of the pump P are changed simultaneously in accordance with the surplus flow amount, and the controller 50 may be configured such that at least one of the valve opening pressure of the relief valve 40 and the delivery capacity of the pump P is changed.

In other words, in this specification, "controlling the valve opening pressure of the relief valve 40 (the operation of the discharge control unit 31) and the delivery capacity of the pump P" means to include, in addition to changing the valve opening pressure of the relief valve 40 and the delivery capacity of the pump P, maintaining them without any change. Furthermore, "controlling the delivery capacity of the pump P and the valve opening pressure of the relief valve 40 in accordance with the flow amount of the working oil passing through the downstream restrictor 32"also means to include maintaining the delivery capacity of the pump P or the valve opening pressure of the relief valve 40 without changing them in accordance with the flow amount of the working oil passing through the downstream restrictor 32.

For example, the controller 50 may perform the control so as to change one of the valve opening pressure of the relief valve 40 or the delivery capacity of the pump P in accordance with the surplus flow amount passing through the discharge control unit 31 and maintain the other.

In addition, the controller 50 may be configured so as to be capable of executing a plurality of switchable control modes. For example, the controller 50 may be configured so as to set the control of the above-described embodiment as "an energy saving mode" and, in addition to the energy saving mode, to execute "the high response mode" in which the control of the valve opening pressure of the relief valve 40 and the delivery capacity of the pump P in accordance with the surplus flow amount is not performed. In the high response mode, the delivery capacity of the pump P is controlled in accordance with the operated amount of the operation lever 1 without depending on the surplus flow amount. In the energy saving mode as in the above-described embodiment, when the surplus flow amount is increased, the valve opening pressure of the relief valve 40 and the delivery capacity of the pump P are controlled so as to reduce the surplus flow amount, and so, it is possible to achieve the energy saving. In contrast, because the high response mode does not reduce the surplus flow amount, when the load state of the hydraulic cylinder 2 is fluctuated and the required pressure (or required flow amount) is increased, an amount corresponding to the surplus flow amount can be immediately diverted to the supply to the hydraulic cylinder 2, and so, excellent responsiveness for the load fluctuations is achieved. By employing the configuration in which the energy saving mode and the high response mode can be switched by an operation of a button or the like by the operator, it is possible to perform appropriate control according to the situation.

In addition, in the above-described embodiment, the upstream restrictor 33 that is the additional resistance portion is provided in the discharge passage 15 separately from the relief valve 40. In contrast, the additional resistance portion may be configured, for example, of a slit or the like formed in the main poppet 42 of the relief valve 40 or in a seat portion (not shown) on which the main poppet 42 is to be seated. In other words, the additional resistance portion may not be separate from the relief valve 40, but may be provided as a part of the configuration of the relief valve 40 and may be built in the relief valve 40. In addition, when the discharge control unit 31 can realize a desired pressure-flow amount characteristic, it is also possible to eliminate the additional resistance portion.

In addition, in the above-described embodiment, the fluid pressure control system 100 is a so-called open-center type system in which, when the operation lever 1 is not operated, the control valve 20 is positioned at the neutral position 20A and the center bypass passage is opened and in which positive control that controls the delivery capacity of the pump P in accordance with the operated amount of the operation lever 1 is executed. In contrast, the pump control device 30 may be applied to a closed-center type system in which the supply passage 11 is not communicated with the tank passage 12 by the control valve 20 when the operation lever 1 is not operated. Even in this case, by controlling at least one of the valve opening pressure of the relief valve 40 and the delivery capacity of the pump P on the basis of the flow amount of the working oil passing through the discharge passage 15, it is possible to realize diverse control in control of the working oil supplied to the hydraulic cylinder 2. In addition, in a case of the closed-center type, when the operation lever 1 is not operated (a lever angle of the operation lever 1 is within a predetermined angle range from the neutral position), energization to the relief valve 40 may be cut off to minimize the valve opening pressure of the relief valve 40, and the supply passage 11 may be opened to the tank T through the relief valve 40.

In addition, the pump control device 30 may be incorporated inside the fluid pressure control device 10 or may be incorporated inside the pump P. In addition, the pump control device 30 may be provided separately from each of the fluid pressure control device 10 and the pump P.

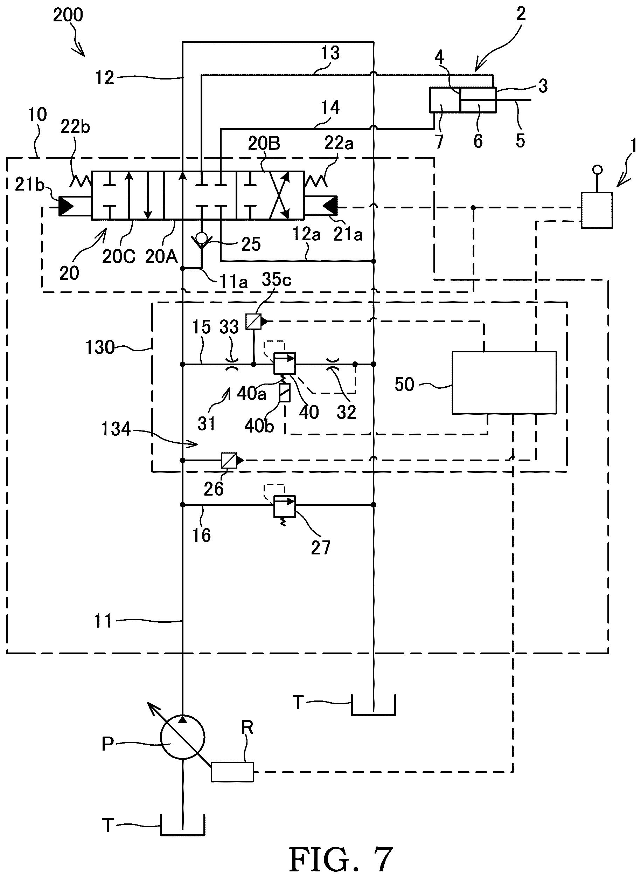

Next, a fluid pressure control system 200 and a pump control device 130 according to a second embodiment of the present invention will be described with reference to FIG. 7.

In the above-described first embodiment, the resistance portion is the downstream restrictor 32 that is provided on the downstream side of the relief valve 40. The pressure measurement unit 34 has the pressure sensor 35a and the tank pressure sensor 35b and measures the upstream-downstream differential pressure across the downstream restrictor 32. Then, the controller 50 acquires the flow amount of the working oil passing through the discharge passage 15 from the upstream-downstream differential pressure across the downstream restrictor 32, and controls the delivery capacity of the pump P and the valve opening pressure of the relief valve 40 on the basis of the flow amount.

In contrast, in the second embodiment, the resistance portion is the upstream restrictor 33 that is provided on the upstream side of the relief valve 40. In the second embodiment, the function of the upstream restrictor 33 that is the additional resistance portion and the function of the downstream restrictor 32 that is the resistance portion in the first embodiment are interchanged with each other. As a result, a pressure measurement unit 134 is configured to measure the upstream-downstream differential pressure across the upstream restrictor 33. In the following, a specific configuration of the second embodiment will be described.

In the second embodiment, the downstream restrictor 32 functions as the additional resistance portion for adjusting the pressure-flow amount characteristic of the relief valve 40. In the second embodiment, the downstream restrictor 32 is not an essential component, and it may not be provided.

The pressure measurement unit 134 in the second embodiment has, instead of the pressure sensor 35a and the tank pressure sensor 35b of the first embodiment: the second pressure sensor 26 serving as the upstream pressure measurement unit that measures the pressure on the upstream side of the upstream restrictor 33; and a third pressure sensor 35c serving as a downstream pressure measurement unit that measures the pressure on the downstream side of the upstream restrictor 33 (the pressure between the upstream restrictor 33 and the relief valve 40). The measurement results obtained by the second pressure sensor 26 and the third pressure sensor 35c are input to the controller 50.

The second pressure sensor 26 has the same configuration as the second pressure sensor of the above-described first embodiment, and the second pressure sensor 26 is provided as a part of the pressure measurement unit 134 in the present embodiment. Because the pressure in the discharge passage 15 on the upstream side of the upstream restrictor 33 is substantially the same as the pressure in the supply passage 11, it is possible to measure the upstream pressure of the upstream restrictor 33 by the second pressure sensor 26. Note that the second pressure sensor 26 may be provided so as to directly measure the pressure in the discharge passage 15 on the upstream side of the upstream restrictor 33.

The controller 50 stores the pressure-flow amount characteristic of the upstream restrictor 33 in advance. The controller 50 acquires the upstream-downstream differential pressure across the upstream restrictor 33 from the measurement results obtained by the second pressure sensor 26 and the third pressure sensor 35c, and acquires the passing flow amount of the discharge passage 15 (the surplus flow amount) on the basis of the upstream-downstream differential pressure and the pressure-flow amount characteristic of the upstream restrictor 33.

Even in such a second embodiment, the surplus flow amount discharged to the tank T through the discharge passage 15 can be acquired from the upstream-downstream differential pressure across the upstream restrictor 33 and the pressure-flow amount characteristic of the upstream restrictor 33, and so, the same operational advantages as the first embodiment are achieved.

Here, the first embodiment and the second embodiment will be compared and described. In the first embodiment, the resistance portion is the downstream restrictor 32 that is provided on the downstream side of the relief valve 40. Thus, even when the flow amount passing through the discharge passage 15 is the same, the pressure measured by the pressure sensor 35a becomes lower than the pressure measured by the third pressure sensor 35c of the second embodiment due to the pressure loss caused at the upstream restrictor 33 and the relief valve 40. Therefore, for the pressure sensor 35a, it is possible to employ a sensor having a measurement range lower than that for the third pressure sensor 35c. In general, even when the same pressure value is to be measured, finer measurement resolution can be obtained by a sensor having a lower measurement range. Thus, in the first embodiment, compared with the second embodiment, it is easier to increase the measurement accuracy of the upstream-downstream differential pressure across the resistance portion, and hence the calculation accuracy of the surplus flow amount passing through the discharge passage 15. In addition, in the first embodiment, the second downstream chamber 47b of the relief valve 40 is connected to the discharge passage 15 on the downstream side of the downstream restrictor 32 and is communicated with the tank T. Therefore, for example, even if high surge pressure is input to the relief valve 40, the pressure in the second downstream chamber 47b is discharged to the tank T through the discharge passage 15, and it is suppressed that the second downstream chamber 47b, and hence the second pilot chamber 47c become high pressure. Thus, it is possible to ensure durability of the solenoid 40b accommodated in the second pilot chamber 47c, and so, high pressure resistance is not required for the solenoid 40b.

On the other hand, in the first embodiment, as shown in FIG. 3, the pressure sensor 35a measures the pressure of the working oil that is guided from the first upstream chamber 43a to the downstream restrictor 32 when the main poppet 42 of the relief valve 40 is opened. In contrast, when the relief valve 40 is opened, the flow of the working oil that is guided to the second upstream chamber 47a, and guided to the discharge passage 15 without passing through the downstream restrictor 32 by opening the pilot poppet 46 is also generated. In other words, in the first embodiment, the flow amount of the working oil passing through the downstream restrictor 32 does not match the total flow amount of the working oil passing through the discharge passage 15, but becomes slightly less by the amount of the working oil passing through the pilot poppet 46 (the second upstream chamber 47a). Usually, such a measurement error of the surplus flow amount is not of a magnitude that affects the control of the delivery capacity of the pump P and the valve opening pressure of the relief valve 40, and therefore does not cause any problem in control.

In the second embodiment, because the upstream restrictor 33 on the upstream side of the relief valve 40 is used as the resistance portion, unlike the first embodiment in which the downstream restrictor 32 is used as the resistance portion, the measurement error of the surplus flow amount due to the passage of a part of the working oil through the pilot poppet 46 is not caused. Thus, the second embodiment is suitable for a case in which highly accurate control is to be performed because the measurement error of the surplus flow amount would affect the delivery capacity of the pump P and the valve opening pressure of the relief valve 40.

The configurations, operations, and effects of the embodiment of the present invention will be collectively described below.

The pump control device 30 of the present embodiment includes: the discharge passage 15 configured to guide the working oil in the supply passage 11 to the tank T; the discharge control unit 31 configured control the flow of the working oil discharged to the tank T through the discharge passage 15; and the controller 50 configured to control the capacity of the pump P in accordance with the operation input by the operator for operating the hydraulic cylinder 2, wherein the discharge control unit 31 has: the relief valve 40 provided in the discharge passage 15, the relief valve 40 being configured to be opened when the pressure in the discharge passage 15 reaches a predetermined valve opening pressure, the relief valve 40 being configured such that the valve opening pressure is variable in accordance with the input electrical signal; the downstream restrictor 32 configured to apply resistance to the flow of the working oil guided from the supply passage 11 to the discharge passage 15 and passed through the relief valve 40; and the pressure measurement unit 34 configured to acquire the upstream-downstream differential pressure across the downstream restrictor 32, and wherein the controller 50 is configured to: increase the delivery flow amount of the pump P in accordance with the increase in the operation input; store, in advance, the pressure-flow amount characteristic that is the relationship between the pressure and the passing flow amount the downstream restrictor 32; acquire the flow amount of the working oil passing through the downstream restrictor 32 based on the pressure-flow amount characteristic of the downstream restrictor 32 and the upstream-downstream differential pressure measured by the pressure measurement unit 34; and change at least one of the delivery capacity of the pump P and the valve opening pressure of the relief valve 40 in accordance with the flow amount of the working oil passing through the downstream restrictor 32.

The pump control device 30 of the present embodiment includes: the discharge passage 15 configured to guide the working oil in the supply passage 11 to the tank T; the discharge control unit 31 configured control the flow of the working oil discharged to the tank T through the discharge passage 15; and the controller 50 configured to control the capacity of the pump P in accordance with the operation input by the operator for operating the hydraulic cylinder 2, wherein the discharge control unit 31 has: the relief valve 40 provided in the discharge passage 15, the relief valve 40 being configured to be opened when the pressure in the discharge passage 15 reaches a predetermined valve opening pressure, the relief valve 40 being configured such that the valve opening pressure is variable in accordance with the input electrical signal; the upstream restrictor 33 configured to apply resistance to the flow of the working oil flowing from the relief valve 40 toward the tank T; and the pressure measurement unit 134 configured to acquire the upstream-downstream differential pressure across the upstream restrictor 33, and wherein the controller 50 is configured to: increase the delivery flow amount of the pump P in accordance with the increase in the operation input ; store, in advance, the pressure-flow amount characteristic that is the relationship between the pressure and the passing flow amount in the upstream restrictor 33; acquire the flow amount of the working oil passing through the upstream restrictor 33 based on the pressure-flow amount characteristic of the upstream restrictor 33 and the upstream-downstream differential pressure measured by the pressure measurement unit 134; and change at least one of the delivery capacity of the pump P and the valve opening pressure of the relief valve 40 in accordance with the flow amount of the working oil passing through the upstream restrictor 33.

With these configurations, at least one of the valve opening pressure of the relief valve 40 and the delivery capacity of the pump P is changed in accordance with the flow amount of the working oil passing through the downstream restrictor 32 or the upstream restrictor 33 of the discharge control unit 31. It is possible to adjust, independently or cooperatively the valve opening pressure of the relief valve 40 and the delivery capacity of the pump P on the basis of the pressure-flow amount characteristic of the downstream restrictor 32 or the upstream restrictor 33. Therefore, even if an opening area of the control valve 20 and the operation input by the operator remain the same, by increasing the valve opening pressure of the relief valve 40 with the increase in the flow amount passing through the downstream restrictor 32 or the upstream restrictor 33, it is possible to increase the pressure and the flow amount of the working oil to be guided to the hydraulic cylinder 2. In addition, it is also possible to reduce only the flow amount passing through the downstream restrictor 32 or the upstream restrictor 33 by reducing the delivery capacity of the pump P by an amount corresponding to the increased amount of the valve opening pressure of the relief valve 40, and by maintaining the pressure and the flow amount of the hydraulic fluid to be guided to the hydraulic cylinder 2. As described above, even when the operation input by the operator is the same, it is possible to realize diverse control for the hydraulic cylinder 2.

In addition, with these configurations, because the controller 50 controls the delivery capacity of the pump P in accordance with the operation input by the operator rather than the negative control, it is possible to omit a restrictor that is provided for controlling the delivery capacity of the pump P in the negative control. Thus, at a neutral state, the working oil delivered from the pump P does not pass through the restrictor on the downstream side of the control valve 20 as in the negative control, and so, it is possible to suppress the energy loss. In addition, by controlling the valve opening pressure of the relief valve 40 or the delivery capacity of the pump P in accordance with the flow amount of the working oil passing through the downstream restrictor 32 of the discharge control unit 31, it is possible to reduce the flow amount of the working oil delivered from the pump P and discharged to the tank T through the discharge passage 15.

In addition, with the pump control device 30, the discharge control unit 31 is characterized by having the upstream restrictor 33 provided in the discharge passage 15, the upstream restrictor 33 being configured to apply resistance to the flow of the working oil flowing from the supply passage 11 toward the relief valve 40.

With this configuration, the pressure-flow amount characteristic of the entire discharge control unit 31 is affected by the pressure-flow amount characteristics of the upstream restrictor 33 and the downstream restrictor 32. Because the pressure-flow amount characteristic of the entire discharge control unit 31 can be adjusted by adjusting the pressure-flow amount characteristics of the upstream restrictor 33 and the downstream restrictor 32, a degree of freedom in design of the pressure-flow amount characteristic of the discharge control unit 31 is improved.

In addition, with the pump control device 30, the controller 50 is configured to, with the increase in the flow amount of the working oil passing through the resistance portion, increase the valve opening pressure of the relief valve 40 and reduce the delivery capacity of the pump P.

With this configuration, it is possible to reduce the flow amount of the working oil discharged to the tank T through the discharge passage 15 by increasing the valve opening pressure of the relief valve 40. In addition, because the flow amount of the working oil supplied from the pump P to the hydraulic cylinder 2 is increased by reducing the flow amount of the working oil discharged to the tank T through the discharge passage 15, it is possible to ensure the flow amount supplied to the hydraulic cylinder 2 even if the delivery capacity of the pump P is reduced. Thus, it is possible to reduce energy consumed while maintaining the workload performed by the pump P.

In addition, with the pump control device 30, the pressure measurement unit 34 further includes: the pressure sensor 35a configured to measure the pressure of the working oil guided from the relief valve 40 to the downstream restrictor 32; and the tank pressure sensor 35b configured to measure the pressure in the tank T, wherein the controller 50 acquires the flow amount of the working oil passing through the downstream restrictor 32 based on the differential pressure between the pressure measured by the pressure sensor 35a and the pressure measured by the tank pressure sensor 35b.

With this configuration, because the flow amount of the working oil passing through the downstream restrictor 32 is acquired based on an actually measured value of the tank pressure, even if the tank pressure is fluctuated, it is possible to accurately acquire the flow amount.

In addition, with the fluid pressure control system 100, the control valve 20 has two operating positions (the extending position 20B and the contracting position 20C) at which the supply passage 11 and the hydraulic cylinder 2 are communicated, and at either operating position, the communication between the supply passage 11 and the tank T is shut off.

As the control valve for controlling the operation of the hydraulic cylinder, there is a control valve that controls the flow amount of the working oil supplied to the hydraulic cylinder by communicating the supply passage and the tank at the operating position while applying resistance to the flow of the working oil by the restrictor or the like. Compared with such a conventional control valve, in the above configuration, it is possible to control the flow amount of the working oil supplied to the hydraulic cylinder 2 by controlling the valve opening pressure of the relief valve 40 of the discharge control unit 31, and so, the configuration is employed such that the supply passage and the tank T are shut off from each other at the operating position. Thus, there is no need to provide, in the control valve 20, a restrictor or the like that controls the flow amount flowing from the supply passage 11 towards the tank T at the operating position, and so, it is possible to simplify the configuration of the control valve 20.

In addition, the fluid pressure control system 100 of the present embodiment includes: the variable displacement pump P configured to deliver the working oil through the supply passage 11; the hydraulic cylinder 2 configured to be operated by the working oil delivered from the pump P; the control valve 20 configured to control the flow of the working oil supplied to and discharged from the fluid pressure actuator in accordance with the operation input by the operator; and the pump control device 30 configured to control the delivery capacity of the pump P, wherein the pump control device 30 has: the discharge passage 15 configured to guide the working oil in the supply passage 11 to the tank T; the discharge control unit 31 configured to control the flow of the working oil discharged to the tank T through the discharge passage 15; and the controller 50 configured to control the capacity of the pump P in accordance with the operation input by the operator for operating the fluid pressure actuator, the discharge control unit 31 has: the relief valve 40 provided in the discharge passage 15, the relief valve 40 being configured to be opened when the pressure in the discharge passage 15 reaches a predetermined valve opening pressure, the relief valve 40 being configured such that the valve opening pressure is variable in accordance with the input electrical signal; the downstream restrictor 32 configured to apply resistance to the flow of the working oil guided from the supply passage 11 to the discharge passage 15 and passed through the relief valve 40; and the pressure measurement unit 34 for acquiring the upstream-downstream differential pressure across the downstream restrictor 32, and wherein the controller 50 is configured to: increase the delivery flow amount of the pump P in accordance with the increase in the operation input; store, in advance, the pressure-flow amount characteristic that is the relationship between the pressure loss and the passing flow amount in the downstream restrictor 32; acquire the flow amount of the working oil passing through the downstream restrictor 32 based on the pressure-flow amount characteristic of the downstream restrictor 32 and the pressure measured by the pressure measurement unit 34; and control at least one of the delivery capacity of the pump P and the valve opening pressure of the relief valve 40 in accordance with the flow amount of the working oil passing through the downstream restrictor 32.

With this configuration, because the delivery capacity of the pump P is controlled in accordance with the operation input by the operator, a restrictor that is provided for controlling the delivery capacity of the pump P as in the negative control can be omitted. Thus, when the control valve 20 is positioned at the neutral position, the working oil delivered from the pump P does not pass through the restrictor on the downstream side of the control valve as in the negative control, and so, it is possible to suppress the energy loss. In addition, because the valve opening pressure of the relief valve 40 or the delivery capacity of the pump P is changed in accordance with the flow amount of the working oil passing through the downstream restrictor 32, it is possible to reduce the flow amount of the working oil delivered from the pump P and discharged to the tank T through the discharge passage 15.

Embodiments of the present invention were described above, but the above embodiments are merely examples of applications of the present invention, and the technical scope of the present invention is not limited to the specific constitutions of the above embodiments.

With respect to the above description, the contents of application No. 2023-98011, with a filing date of June 14, 2023 in Japan, are incorporated herein by reference.

## Claims

1. A pump control device for controlling a delivery capacity of a variable displacement pump in a fluid pressure control system, the fluid pressure control system comprising the pump configured to deliver hydraulic fluid to a fluid pressure actuator through a supply passage, and a control valve configured to control a flow of the hydraulic fluid supplied to and discharged from the fluid pressure actuator in accordance with an operation input by an operator for driving the fluid pressure actuator, the pump control device comprising:
a discharge passage configured to guide the hydraulic fluid in the supply passage to a tank;
a discharge control unit configured to control the flow of the hydraulic fluid discharged to the tank through the discharge passage; and
a controller configured to control the delivery capacity of the pump and operation of the discharge control unit in accordance with the operation input by the operator, wherein
the discharge control unit has:
a relief valve provided in the discharge passage, the relief valve being configured to be opened when a pressure in the discharge passage reaches a predetermined valve opening pressure, the relief valve being configured such that the valve opening pressure is variable in accordance with an input electrical signal;
a resistance portion configured to apply resistance to the flow of the hydraulic fluid guided from the supply passage to the discharge passage and passed through the relief valve; and
a pressure measurement unit configured to acquire an upstream-downstream differential pressure across the resistance portion, and wherein
the controller is configured to:
store, in advance, a pressure-flow amount characteristic that is a relationship between a pressure and a passing flow amount in the resistance portion;
acquire the flow amount of the hydraulic fluid passing through the resistance portion based on the pressure-flow amount characteristic of the resistance portion and the upstream-downstream differential pressure acquired by the pressure measurement unit; and
change at least one of the delivery capacity of the pump and the valve opening pressure of the relief valve in accordance with the flow amount of the hydraulic fluid passing through the resistance portion.

2. The pump control device according to claim 1, wherein
the discharge control unit has an additional resistance portion provided in the discharge passage, the additional resistance portion being configured to apply resistance to the flow of the hydraulic fluid flowing from the supply passage towards the relief valve.

3. The pump control device according to claim 1, wherein
the controller is configured to, with an increase in the flow amount of the hydraulic fluid passing through the resistance portion, increase the valve opening pressure of the relief valve and reduce the delivery capacity of the pump.

4. The pump control device according to claim 1, wherein
the pressure measurement unit further comprises:
an upstream pressure measurement unit configured to measure a pressure of the hydraulic fluid guided from the relief valve to the resistance portion; and
a tank pressure measurement unit configured to measure a pressure in the tank, and
the controller acquires the flow amount of the hydraulic fluid passing through the resistance portion based on a differential pressure between the pressure measured by the upstream pressure measurement unit and the pressure measured by the tank pressure measurement unit.

5. A fluid pressure control system for controlling operation of a fluid pressure actuator, the fluid pressure control system comprising:
a variable displacement pump configured to deliver hydraulic fluid through a supply passage;
a control valve having a neutral position at which the hydraulic fluid delivered from the pump is guided to a tank at a neutral state with no operation input by an operator, the control valve being configured to control a flow of the hydraulic fluid supplied to and discharged from the fluid pressure actuator in accordance with the operation input; and
a pump control device configured to control a delivery capacity of the pump, wherein
the pump control device has:
a discharge passage configured to guide the hydraulic fluid in the supply passage to the tank;
a discharge control unit configured to control the flow of the hydraulic fluid discharged to the tank through the discharge passage; and
a controller configured to control the delivery capacity of the pump and operation of the discharge control unit in accordance with the operation input by the operator for operating the fluid pressure actuator,
the discharge control unit has:
a relief valve provided in the discharge passage, the relief valve being configured to be opened when a pressure in the discharge passage reaches a predetermined valve opening pressure, the relief valve being configured such that the valve opening pressure is variable in accordance with an input electrical signal;
a resistance portion configured to apply resistance to the flow of the hydraulic fluid guided from the supply passage to the discharge passage and passed through the relief valve; and
a pressure measurement unit configured to acquire an upstream-downstream differential pressure across the resistance portion, and wherein
the controller is configured to:
store, in advance, a pressure-flow amount characteristic that is a relationship between a pressure loss and a passing flow amount in the resistance portion;
acquire the flow amount of the hydraulic fluid passing through the resistance portion based on the pressure-flow amount characteristic of the resistance portion and the upstream-downstream differential pressure acquired by the pressure measurement unit; and
change at least one of the delivery capacity of the pump and the valve opening pressure of the relief valve in accordance with the flow amount of the hydraulic fluid passing through the resistance portion.

6. The fluid pressure control system according to claim 5, wherein
the control valve has an operating position at which the supply passage and the fluid pressure actuator are communicated, and
a communication between the supply passage and the tank is shut off in the operating position.

7. A pump control device for controlling a delivery capacity of a variable displacement pump in a fluid pressure control system, the fluid pressure control system comprising the pump configured to deliver hydraulic fluid to a fluid pressure actuator through a supply passage, and a control valve configured to control a flow of the hydraulic fluid supplied to and discharged from the fluid pressure actuator in accordance with an operation input by an operator for driving the fluid pressure actuator, the pump control device comprising:
a discharge passage configured to guide the hydraulic fluid in the supply passage to a tank;
a discharge control unit configured to control the flow of the hydraulic fluid discharged to the tank through the discharge passage; and
a controller configured to control the delivery capacity of the pump and operation of the discharge control unit in accordance with the operation input by the operator, wherein
the discharge control unit has:
a relief valve provided in the discharge passage, the relief valve being configured to be opened when a pressure in the discharge passage reaches a predetermined valve opening pressure, the relief valve being configured such that the valve opening pressure is variable in accordance with an input electrical signal;
a resistance portion provided in the discharge passage, the resistance portion being configured to apply resistance to the flow of the hydraulic fluid flowing from the supply passage to the relief valve;
a pressure measurement unit configured to acquire an upstream-downstream differential pressure across the resistance portion, and wherein
the controller is configured to:
store, in advance, a pressure-flow amount characteristic that is a relationship between a pressure and a passing flow amount in the resistance portion;
acquire the flow amount of the hydraulic fluid passing through the resistance portion based on the pressure-flow amount characteristic of the resistance portion and the upstream-downstream differential pressure acquired by the pressure measurement unit; and
change at least one of the delivery capacity of the pump and the valve opening pressure of the relief valve in accordance with the flow amount of the hydraulic fluid passing through the resistance portion.
